# EUROPEAN PATENT APPLICATION

(11) **EP 4 589 612 A1**
(43) Date of publication of application: **23.07.2025**
(21) Application number: 23865075.8
(22) Date of filing: 20.07.2023
(51) Int. Cl.: H01F 38/14, B60M 7/00, H02J 50/05, H02J 50/10

(54) **POWER TRANSMISSION COIL UNIT**

(30) Priority: 12.09.2022 JP 2022144648
(71) Applicant: TOYOTA JIDOSHA KABUSHIKI KAISHA, Toyota-shi Aichi 471-8571 (JP); DENSO CORPORATION, Kariya-shi, Aichi 448-8661 (JP)
(72) Inventor: KOBAYASHI, Katsuya, Toyota-shi, Aichi 471-8571 (JP); HASHIMOTO, Toshiya, Toyota-shi, Aichi 471-8571 (JP); SAIGUSA, Shinjiro, Toyota-shi, Aichi 471-8571 (JP); YAMASHITA, Osamu, Toyota-shi, Aichi 471-8571 (JP); IWATA, Naoki, Toyota-shi, Aichi 471-8571 (JP); CHO, Sungmin, Toyota-shi, Aichi 471-8571 (JP); TAKITA, Shimpei, Kariya-shi, Aichi 448-8661 (JP); TAKAHASHI, Eisuke, Kariya-shi, Aichi 448-8661 (JP); YAMAGUCHI, Nobuhisa, Kariya-shi, Aichi 448-8661 (JP)
(74) Representative: D Young & Co LLP
(86) International application number: PCT/JP2023/026573
(87) International publication number: WO 2024/057713

(57) **Abstract**

A power transmission coil unit 1 includes a power transmission coil 2 and a power supply member 3 electrically connected to a power source and power transmission coil 2. The power supply member 3 is provided with a first metal sheet 31 and second metal sheet 32 insulated through an insulating layer 34 and is configured so that when electric power has been supplied from the power source, current flows through one of the first metal sheet 31 or second metal sheet 32 to the power transmission coil 2 and the current flowing through the power transmission coil 2is returned through the other of the first metal sheet 31 or second metal sheet 32 to the power source and configured so that the direction of the current flowing through the first metal sheet 31 and the direction of the current flowing through the second metal sheet 32 become opposite.

## Description

### FIELD

The present invention relates to a power transmission coil unit.

### BACKGROUND

JP2014-236540A discloses a conventional power supply mat (power transmission apparatus) for noncontact power supply comprised of a plurality of connected sheet shaped power transmission coil units configured so as to transmit electric power to a vehicle by noncontact.

### SUMMARY

If trying to expand a power supply mat by connecting power transmission coil units with each other like the above-mentioned conventional power supply mat, as the scale of expansion becomes greater, the total value of the lengths of the internal power interconnects in the power transmission coil units becomes greater, so the effect due to the parasitic inductance of the power interconnects also becomes greater. For this reason, due to the effect of parasitic inductance, the resonant frequencies of the power transmission coil units are liable to end up deviating from the preset desired resonant frequency (for example, resonant frequency of power reception coil unit of moving body or other object for supply of power) and the transmission efficiency is liable to fall.

The present invention was made focusing on such a problem and has as its object to keep down a parasitic inductance of a power transmission coil unit.

To solve the above problem, the power transmission coil unit according to one aspect of the present invention is comprised of a power transmission coil and a power supply member electrically connected to a power source and power transmission coil and supplying electric power supplied from the power source to the power transmission coil. The power supply member is provided with a first metal sheet and second metal sheet insulated through an insulating layer and is configured so that when electric power has been supplied from the power source, current flows through one of the first metal sheet or second metal sheet to the power transmission coil and the current flowing through the power transmission coil is returned through the other of the first metal sheet or second metal sheet to the power source and configured so that the direction of the current flowing through the first metal sheet and the direction of the current flowing through the second metal sheet become opposite.

According to this aspect of the present invention, the magnetic field formed by the current flowing through one of the first metal sheet or second metal sheet can be cancelled by the magnetic field formed by the current flowing through the other of the first metal sheet or second metal sheet. For this reason, it is possible to keep low the parasitic inductance of a power transmission coil unit.

### BRIEF DESCRIPTION OF DRAWINGS

FIG. 1 is a schematic perspective view of a power supply mat according to a first embodiment of the present invention.
FIG. 2 is a schematic disassembled perspective view of a power transmission coil unit according to the first embodiment of the present invention.
FIG. 3 is a schematic perspective view of a board type busbar according to the first embodiment of the present invention.
FIG. 4 is a schematic cross-sectional view of a board type busbar along the line IV-IV of FIG. 3.
FIG. 5A is a schematic perspective view showing some of the parts of the board type busbar according to the first embodiment of the present invention.
FIG. 5B is a schematic perspective view showing some of the parts of the board type busbar according to the first embodiment of the present invention.
FIG. 6 is a view showing the state where power transmission coil units are connected with each other.
FIG. 7 is a view showing the state where a direction of current flowing through a first metal sheet and a direction of current flowing through a second metal sheet are opposite.
FIG. 8 is a schematic perspective view of a board type busbar according to a second embodiment of the present invention.
FIG. 9 is a schematic cross-sectional view of a board type busbar along the line IX-IX of FIG. 8.

### DESCRIPTION OF EMBODIMENTS

Below, embodiments will be explained in detail while referring to the drawings. Note that, in the following explanation, similar component elements will be assigned the same reference notations.

### (First Embodiment)

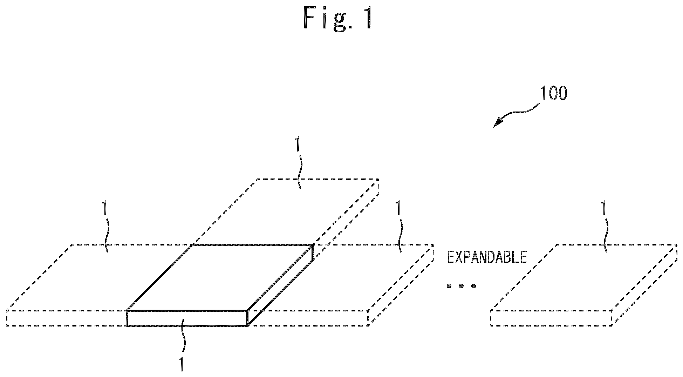

FIG. 1 is a schematic perspective view of a power supply mat 100 according to a first embodiment of the present invention.

The power supply mat 100 is, for example, a mat configured so as to transmit electric power supplied from an external power source or other power source to an object for supply of power by noncontact and is provided with at least one sheet-shaped power transmission coil unit 1. The object for supply of power is not particularly limited into type so long as having a power reception coil unit corresponding to the power transmission coil unit 1. It may be a vehicle or micro pallet or other moving body and may be a communication device, home electrical appliance, etc.

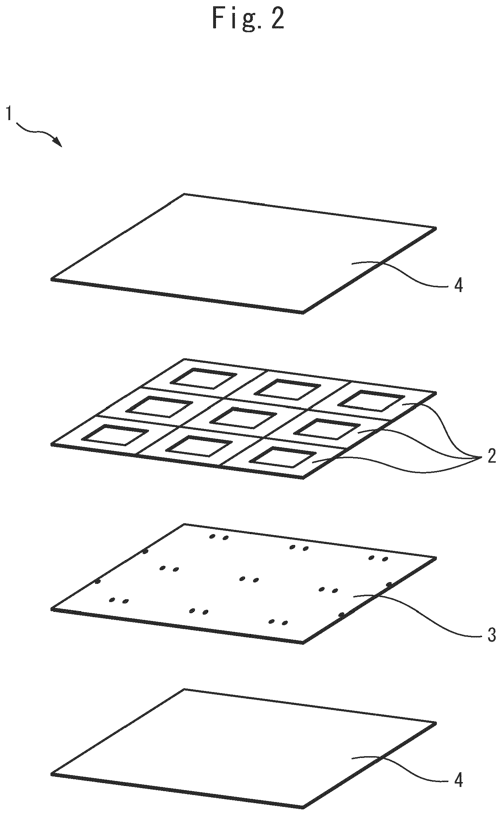

The power transmission coil unit 1, as shown in FIG. 1, is configured so as to be able to be connected with other units. Due to this, it becomes possible to freely expand the power supply mat 100. Below, details of the power transmission coil unit 1 will be explained with reference to FIG. 2 to FIG. 6.

FIG. 2 is a schematic disassembled perspective view of the power transmission coil unit 1. Note that in the following explanation, for convenience, among the front and rear surfaces of the power transmission coil unit 1, the side where the object to be supplied with power is arranged will be referred to as the "front side" while the opposite side will be referred to as the "rear side".

The power transmission coil unit 1 is provided with one or more power transmission coils 2, a board type busbar 3 arranged at a bottom side of the power transmission coils 2, and covers 4. At that time, between the power transmission coils 2 and board type busbar 3, for example, sheet shaped ferrite may be interposed.

Each power transmission coil 2, for example, forms a resonance circuit together with a capacitor (not shown) etc. and transmits electric power to an object for supply of power placed on the power transmission coil unit 1 by noncontact by magnetic field resonance coupling (magnetic field resonance). Note that the system for transmission of electric power is not limited to magnetic field resonance coupling and may also be magnetic field coupling (electromagnetic induction), electric field coupling, electric field resonance coupling (electric field resonance), or other electric power transmission system. FIG. 2 shows nine power transmission coils 2.

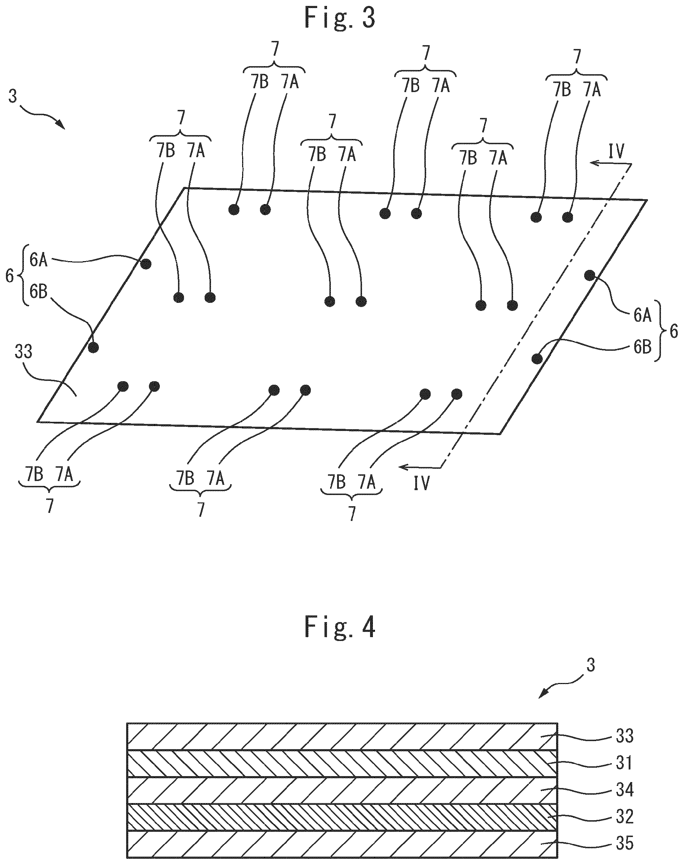

The board type busbar 3 is electrically connected to a power source (not shown) and the respective power transmission coils 2 and supplies electric power supplied from the power source to the power transmission coils 2. Details of the board type busbar 3 will be explained later from FIG. 3 to FIG. 6.

The covers 4 are arranged at the front side of the power transmission coils 2 and the rear side of the board type busbar 3 and protect the power transmission coils 2 and board type busbar 3. In the present embodiment, the covers 4 are comprised of members having flexibility so as to enable the power transmission coil unit 1 to be rolled up or folded up.

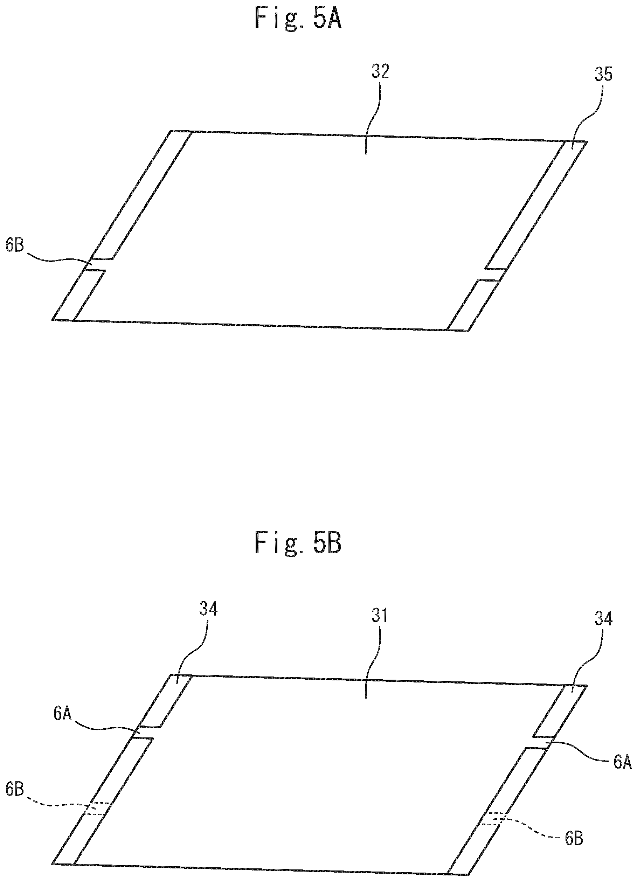

FIG. 3 is a schematic perspective view of the board type busbar 3. FIG. 4 is a schematic cross-sectional view of the board type busbar 3 along the line IV-IV of FIG. 3. FIG. 5A and FIG. 5B are schematic perspective views showing some of the parts of the board type busbar 3.

As shown in FIG. 4, the board type busbar 3 is provided with a first metal sheet 31, second metal sheet 32, front side insulating sheet 33 arranged at the front side of the first metal sheet 31, intermediate insulating sheet 34 arranged between the first metal sheet 31 and second metal sheet 32, and rear side insulating sheet 35 arranged at the rear side of the second metal sheet 32. FIG. 5A is a perspective view showing the state after detachment of the front side insulating sheet 33, first metal sheet 31, and intermediate insulating sheet 34 from the board type busbar 3 (that is, perspective view showing state where rear side insulating sheet 35 and second metal sheet 32 are stacked together), while FIG. 5B is a perspective view showing the state after detachment of only the front side insulating sheet 33 from the board type busbar 3 (that is, perspective view showing state where rear side insulating sheet 35, second metal sheet 32, intermediate insulating sheet 34, and first metal sheet 31 are stacked).

The board type busbar 3 is insulated by the front side insulating sheet 33 from a part arranged at the front side of the board type busbar 3 (in the present embodiment, the power transmission coil 2) and similarly is insulated by the rear side insulating sheet 35 from a part arranged at the rear side of the board type busbar 3 (in the present embodiment, the cover 4). The first metal sheet 31 and second metal sheet 32 are insulated from each other by the intermediate insulating sheet 34 arranged between them.

Further, as shown in FIG. 3, the board type busbar 3 is provided with pairs of power supply terminals 6 for supplying electric power from the power source to the board type busbar 3 and pairs of power transmission coil connection terminals 7 for supplying electric power supplied to the board type busbar 3 to the power transmission coils 2 arranged at the front side of the board type busbar 3. FIG. 3 illustrates as one example a board type busbar 3 provided with two sets of power supply terminals 6 and nine sets of power transmission coil connection terminals 7.

The power supply terminals 6 are used as terminals for electrically connecting the board type busbar 3 and in turn the power transmission coil unit 1 to the power source and are also used as terminals for electrically connecting power transmission coil units 1 with each other when connecting power transmission coil units 1 with each other.

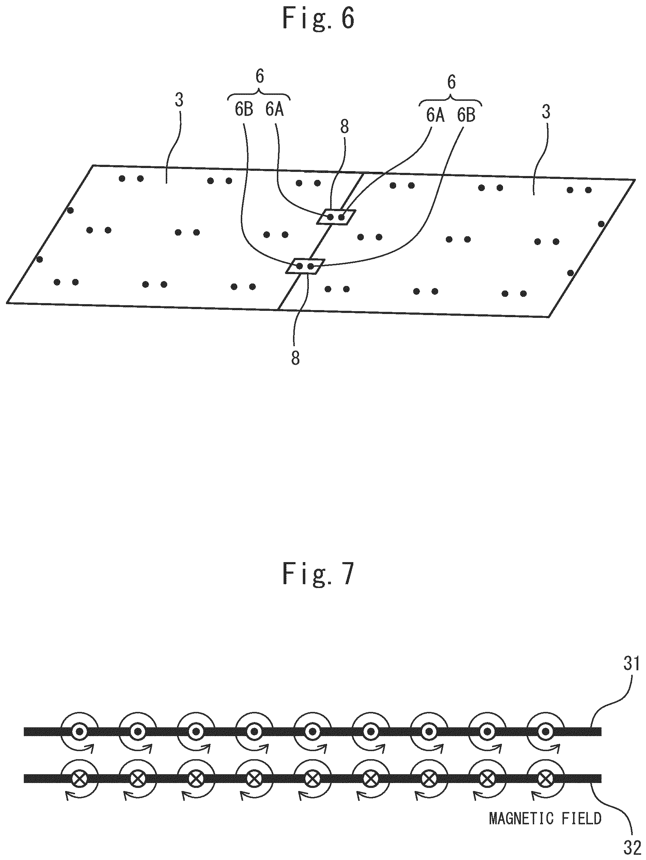

One terminal 6A among each pair of power supply terminals 6 (below, referred to as the "first power supply terminal") is connected with the first metal sheet 31. When connecting the power transmission coil unit 1 to the power source, one output terminal among a pair of output terminals of the power source for application of voltage is electrically connected with through for example a power supply line etc. Further, for example, as shown in FIG. 6, when connecting a power transmission coil unit 1 with another unit, the first power supply terminal 6A is electrically connected with a first power supply terminal 6A of the board type busbar 3 of the other power transmission coil unit 1 to be connected to through for example a thin electroconductive fastener 8 etc.

On the other hand, the other terminal 6B among each pair of power supply terminals 6 (below, referred to as the "second power supply terminal") is conductive with the second metal sheet 32. When connecting the power transmission coil unit 1 to the power source, the other output terminal among the pair of output terminals of the power source for application of voltage is electrically connected with through for example a power supply line etc. Further, for example, as shown in FIG. 6, when connecting a power transmission coil unit 1 with another unit, the second power supply terminal 6B is electrically connected with a second power supply terminal 6B of the board type busbar 3 of the power transmission coil unit 1 to be connected to through for example a thin electroconductive fastener 8 etc. Note that, in the present embodiment, as shown in FIG. 3 and FIG. 6, the power supply terminals 6 are provided at the two end parts of the left and right of the board type busbar 3, but they additionally may also be provided at the two end parts of the top and bottom. By doing this, it is possible to connect power transmission coil units 1 not only at the left and right, but also at the top and bottom, so it is possible to expand the power supply mat 100 to the top, bottom, left, and right.

The power transmission coil connection terminals 7 are used as terminals for electrically connecting the board type busbar 3 to the power transmission coil 2.

One terminal 7A among each pair of power transmission coil connection terminals 7 (below, referred to as the "first power transmission coil connection terminal") is conductive with the first metal sheet 31 and is electrically connected with one end part of the power transmission coil 2.

The other terminal 7B among the pair of power transmission coil connection terminals 7 (below, referred to as the "second power transmission coil connection terminal") is conductive with the second metal sheet 32 and is electrically connected with the other end part of the power transmission coil 2.

Due to such a configuration, if current is supplied from the power source through the first power supply terminal 6A to the first metal sheet 31, that current flows through the first metal sheet 31 from the first metal sheet 31 through the first power transmission coil connection terminal 7A to be supplied to the power transmission coil 2. Further, the current flowing through the power transmission coil 2 flows through the second power transmission coil connection terminal 7B into the second metal sheet 32 and flows through the second metal sheet 32 to be returned from the second metal sheet 32 through the second power supply terminal 6B to the power source. Naturally, the flow of current becomes opposite if current is supplied from the power source through the second power supply terminal 6B to the second metal sheet 32.

Further, at this time, in the present embodiment, the positions of the pair of power supply terminals 6 on the board type busbar 3 are determined so that the direction of the current flowing through the first metal sheet 31 and the direction of the current flowing through the second metal sheet 32 become opposite. Due to this, the following action and effects can be obtained.

That is, as shown in FIG. 7, by providing an insulating layer (in the present embodiment, the intermediate insulating sheet 34) between the first metal sheet 31 and second metal sheet 32 respectively having widths and making the direction of the current flowing through the first metal sheet 31 and the direction of the current flowing through the second metal sheet 32 opposite, the direction of the magnetic field formed by the current flowing through the first metal sheet 31 (in the example of FIG. 7, counterclockwise) and the direction of the magnetic field formed by the current flowing through the second metal sheet 32 (in the example of FIG. 7, clockwise) can be made opposite.

Due to this, the magnetic field formed by the current flowing through one metal sheet of the first metal sheet 31 or second metal sheet 32 can be cancelled out by the magnetic field formed by the current flowing through the other metal sheet of the first metal sheet 31 or second metal sheet 32. For this reason, it is possible to reduce the parasitic inductance of the power transmission coil unit 1, that is, the inductance of the route of power at the inside of the power transmission coil unit 1 for supplying electric power of the power source to the power transmission coil 2.

Note that, the shorter the distance in the thickness direction of the first metal sheet 31 and second metal sheet 32, that is, the thinner the thickness of the intermediate insulating sheet 34, the greater the effect of cancellation of the magnetic field. For this reason, the thickness of the intermediate insulating sheet 34 is desirably made as thin as possible within a range where insulation between the first metal sheet 31 and the second metal sheet 32 can be secured.

The power transmission coil unit 1 according to the present embodiment explained above is provided with a power transmission coil 2 and a board type busbar 3 (power supply member) electrically connected to the power source and the power transmission coil 2 and supplying electric power supplied from the power source to the power transmission coil 2. The board type busbar 3 is provided with a first metal sheet 31 and second metal sheet 32 insulated through an intermediate insulating sheet 34 (insulating layer) and is configured so that when electric power is supplied from the power source, current flows to the power transmission coil 2 through one of the first metal sheet 31 or second metal sheet 32 and the current flowing through the power transmission coil 2 is returned to the power source through the other of the first metal sheet 31 or second metal sheet 32 and is configured so that the direction of the current flowing through the first metal sheet 31 and the direction of the current flowing through the second metal sheet 32 become opposite.

Due to this, the magnetic field formed by the current flowing through one metal sheet of the first metal sheet 31 or second metal sheet 32 can be cancelled out by the magnetic field formed by the current flowing through the other metal sheet of the first metal sheet 31 or second metal sheet 32. For this reason, it is possible to reduce the parasitic inductance of the power transmission coil unit 1, that is, the inductance of the route of power at the inside of the power transmission coil unit 1 for supplying electric power of the power source to the power transmission coil 2. Further, even if connecting power transmission coil units 1 with each other to expand the power supply mat 100, since the effect of parasitic inductance is small, it is possible to keep the resonant frequency of a power transmission coil unit 1 from deviating from the preset desired resonant frequency (for example, the resonant frequency of a power reception coil unit of a moving body or other object for supply of power) and keep the transmission efficiency from falling.

The board type busbar 3 according to the present embodiment specifically has a pair of power supply terminals 6 for supplying electric power from a power source to the board type busbar 3 and a pair of power transmission coil connection terminals 7 for supplying electric power supplied to the board type busbar 3 to the power transmission coil 2. The first power supply terminal 6A of one of the pair of power supply terminals 6 is used as the terminal for electrical connection with one output terminal of the power source and is conductive with the first metal sheet 31. The other second power supply terminal 6B of the pair of power supply terminals 6 is used as the terminal for electrical connection with the other output terminal of the power source and is conductive with the second metal sheet 32. Further, the first power transmission coil connection terminal 7A of one of the pair of power transmission coil connection terminals 7 is used as the terminal for electrical connection with one end part of the power transmission coil 2 and is conductive with the first metal sheet 31, while the other second power transmission coil connection terminal 7B is used as the terminal for electrical connection with the other end part of the power transmission coil 2 and is conductive with the second metal sheet 32. Further, the positions of the pair of power supply terminals 6 are determined on the board type busbar 3 so that the direction of the current flowing through the first metal sheet 31 and the direction of the current flowing through the second metal sheet 32 become opposite.

Further, in the present embodiment, the pair of power supply terminals 6 of the board type busbar 3 are also used as terminals for electrically connecting other power transmission coil units 1. Due to this, it is possible to connect power transmission coil units and easily expand the power supply mat 100.

### (Second Embodiment)

Next, a second embodiment of the present invention will be explained. The present embodiment differs from the first embodiment on the point of provision of a heat dissipating material 36 for dissipation of heat of the power transmission coil at the board type busbar. Below, the explanation will be given focusing on this point of difference.

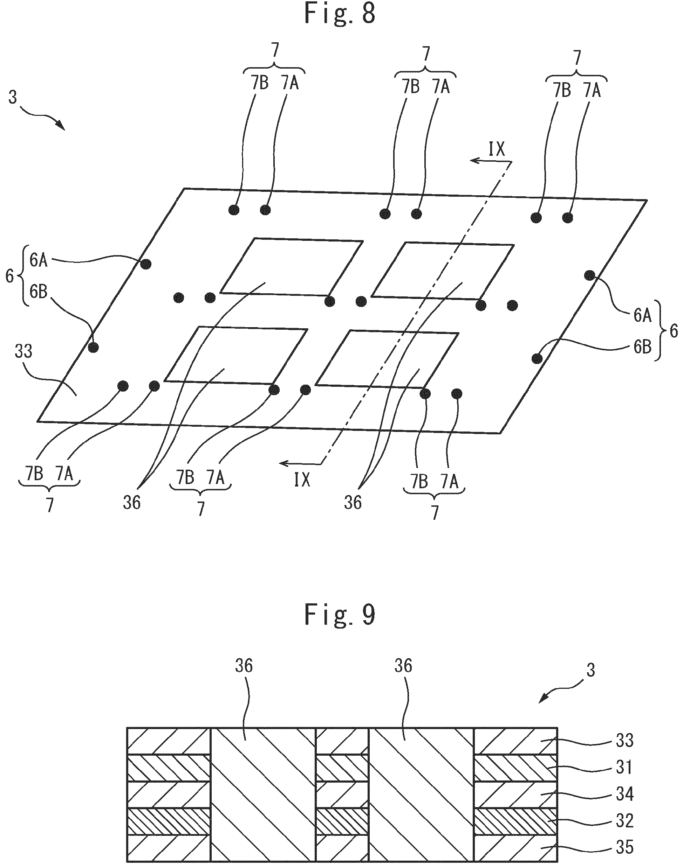

FIG. 8 is a schematic perspective view of a board type busbar 3 according to the present embodiment. FIG. 9 is a schematic cross-sectional view of a board type busbar 3 along the line IX-IX of FIG. 8.

As shown in FIG. 8 and FIG. 9, the board type busbar 3 according to the present embodiment is provided with a heat dissipating material 36 running through the board type busbar 3 from the front surface side to rear surface side. As the heat dissipating material 36, for example, aluminum or other metal with good thermal conductivity can be used.

In the present embodiment, the heat dissipating material 36 is attached to four locations at the center part of the board type busbar 3 after securing insulation between the first metal sheet 31 and second metal sheet 32. However, the heat dissipating material 36 can be attached to any positions and range of the board type busbar 3 within a range not obstructing the flow of current through the first metal sheet 31 and second metal sheet 32.

By providing a heat dissipating material 36 running through the board type busbar 3 from its front surface side to its rear surface side in this way, it is possible to dissipate the heat of the power transmission coils 2 arranged at the front surface side of the board type busbar 3 by the heat dissipating material 36 to the rear surface side of the board type busbar 3 and in turn the rear surface side of the power transmission coil unit 1.

Each power transmission coil 2 of the power transmission coil unit 1 according to the present embodiment explained above is arranged on the front surface side of the board type busbar 3 (power supply member). The board type busbar 3 is provided with the heat dissipating material 36 running through the board type busbar 3 from its front surface side to its rear surface side.

Specifically, the board type busbar 3 is provided with a front side insulating sheet 33 arranged at the front side of the first metal sheet 31, an intermediate insulating sheet 34 arranged between the first metal sheet 31 and the second metal sheet 32, and a rear side insulating sheet 35 arranged at the rear side of the second metal sheet 32. The heat dissipating material 36 is attached to the board type busbar 3 so as to pass through the front side insulating sheet 33, first metal sheet 31, intermediate insulating sheet 34, second metal sheet 32, and rear side insulating sheet 35 and dissipate heat of the power transmission coil 2 to the rear surface side of the board type busbar 3.

Due to this, it is possible to dissipate the heat of the power transmission coils 3 arranged at the front surface side of the board type busbar 3 by the heat dissipating material 36 to the rear surface side of the board type busbar 3 and in turn the rear surface side of the power transmission coil unit 1.

Further, it is possible to block a magnetic field heading toward the rear surface side of the power transmission coil unit 1 by the first metal sheet 31 and second metal sheet 32 in the magnetic field generated by the power transmission coil 2 since the power transmission coil 2 is arranged at the front surface side of the board type busbar 3 and the front side insulating sheet 33, first metal sheet 31, intermediate insulating sheet 34, second metal sheet 32, and rear side insulating sheet 35 are arranged from the front surface side in that order. For this reason, at the time of use of the power transmission coil unit 1 and in turn the power supply mat 100, the more possible it is to keep from ending up mistakenly heating some sort of part buried in the ground. Further, the larger the total value of the thicknesses of both the first metal sheet 31 and second metal sheet 32, the greater the effect of blocking the magnetic field.

Above, embodiments of the present invention were explained, but the above embodiments just show some of the examples of application of the present invention and are not intended to limit the technical scope of the present invention to the specific constitutions of the above embodiments.

### REFERENCE SIGNS LIST

- 1: power transmission coil unit
- 2: power transmission coil
- 3: board type busbar (power supply member)
- 6: power supply terminal
- 6A: first power supply terminal
- 6B: second power supply terminal
- 7: power transmission coil connection terminal
- 7A: first power transmission coil connection terminal
- 7B: second power transmission coil connection terminal
- 31: first metal sheet
- 32: second metal sheet
- 33: front side insulating sheet
- 34: intermediate insulating sheet
- 35: rear side insulating sheet
- 36: heat dissipating material

## Claims

1. A power transmission coil unit for noncontact power supply comprising:
a power transmission coil; and
a power supply member electrically connected to a power source and power transmission coil and supplying electric power supplied from the power source to the power transmission coil, wherein
the power supply member is provided with a first metal sheet and second metal sheet insulated through an insulating layer and is configured so that when electric power has been supplied from the power source, current flows through one of the first metal sheet or second metal sheet to the power transmission coil and the current flowing through the power transmission coil is returned through the other of the first metal sheet or second metal sheet to the power source and configured so that the direction of the current flowing through the first metal sheet and the direction of the current flowing through the second metal sheet become opposite.

2. The power transmission coil unit according to claim 1, wherein
the power supply member has a pair of power supply terminals for supplying electric power from the power source to the power supply member and a pair of power transmission coil connection terminals for supplying electric power supplied to the power supply member to the power transmission coil,
a first power supply terminal of one of the pair of power supply terminals is used as the terminal for electrical connection with one output terminal of the power source and is conductive with the first metal sheet,
a second power supply terminal of the other of the pair of power supply terminals is used as the terminal for electrical connection with the other output terminal of the power source and is conductive with the second metal sheet,
a first power transmission coil connection terminal of one of the pair of power transmission coil connection terminals is used as a terminal for electrical connection with one end part of the power transmission coil and is conductive with the first metal sheet,
a second power transmission coil connection terminal of the other of the pair of power transmission coil connection terminals is used as a terminal for electrical connection with the other end part of the power transmission coil and is conductive with the second metal sheet, and
the positions of the pair of power supply terminals on the power supply member are determined so that the direction of the current flowing through the first metal sheet and the direction of the current flowing through the second metal sheet become opposite.

3. The power transmission coil unit according to claim 2, wherein
the pair of power supply terminals are also used as terminals for electrically connecting another power transmission coil unit.

4. The power transmission coil unit according to any one of claim 1 to claim 3, wherein
the power transmission coil is placed at a front surface side of the power supply member, and
the power supply member is provided with a heat dissipating material running through the power supply member from the front surface side to the rear surface side.

5. The power transmission coil unit according to claim 4, wherein
the power supply member comprises:
a front side insulating sheet arranged at a front side of the first metal sheet;
an intermediate insulating sheet as the insulating layer arranged between the first metal sheet and the second metal sheet; and
a rear side insulating sheet arranged at a rear side of the second metal sheet, and
the heat dissipating material runs through the front side insulating sheet, first metal sheet, intermediate insulating sheet, second metal sheet, and rear side insulating sheet and dissipates heat of the power transmission coil to the rear surface side of the power supply member.
